# EUROPÄISCHE PATENTSCHRIFT

(11) **EP 2 520 810 B1**
(45) Veröffentlichungstag und Bekanntmachung des Hinweises auf die Patenterteilung: **08.01.2020**
(21) Anmeldenummer: 12002240.5
(22) Anmeldetag: 28.03.2012
(51) Int. Cl.: F04D 29/70, B01D 45/08, B01D 53/24

(54) **Vorrichtung mit einer Leitstruktur**
Device with a guidance structure
Dispositif doté d'une structure de commande

(30) Priorität: 03.05.2011 DE 102011100311
(43) Veröffentlichungstag der Anmeldung: 07.11.2012
(73) Patentinhaber: Pfeiffer Vacuum GmbH, 35614 Aßlar (DE)
(72) Erfinder: Hofmann, Jan, 35305 Grünberg (DE); Niessner, Wolfgang, 35398 Giessen (DE)
(74) Vertreter: Manitz Finsterwald Patent- und Rechtsanwaltspartnerschaft mbB

(56) Entgegenhaltungen:
- EP-A2- 2 246 573
- WO-A1-00/23713
- WO-A1-99/37918
- WO-A1-2004/092585
- DE-U1-202009 006 288
- US-A- 5 537 833

## Beschreibung

Die Erfindung betrifft eine Vorrichtung nach dem Oberbegriff des Anspruchs 1.

Hochvakuumpumpen sind aus der Prozessindustrie nicht wegzudenken. Beispielhaft sei die Erzeugung von Vakuum mittels Turbomolekularpumpen in der Halbleiterherstellung genannt. Die abzupumpenden Gase enthalten häufig Bestandteile, die zu Schichten auskondensieren können. Es gilt, das Eindringen solcher Bestandteile in die Turbomolekularpumpe zu reduzieren, denn Niederschläge auf dem sich schnell drehenden Rotor führen zu einer anwachsenden Unwucht. Diese wiederum kann zu einem vorzeitigen Ausfall der Pumpe führen.

Zum Schutz von Hochvakuumpumpen sind Vorrichtungen bekannt, die im Gasstrom vor dem Einlass der Hochvakuumpumpe angeordnet sind. Im Gehäuse der Vorrichtung sind Leitbleche vorgesehen, die Abscheidungen in der Hochvakuumpumpe auf ein tolerierbares Maß reduzieren sollen.

Bei der Gestaltung solcher Schutzeinrichtungen sind sich widersprechende Anforderungen zu erfüllen: einerseits sollen möglichst viele kritische Gase aus dem Gasstrom entfernt werden. Andererseits darf das Saugvermögen der Hochvakuumpumpe nicht zu stark gesenkt werden, da sonst erhebliche Mehrkosten entstehen.

Es ist daher Aufgabe der Erfindung, eine Vorrichtung vorzustellen, die die Bildung von Ablagerungen in der Hochvakuumpumpe reduziert.

Diese Aufgabe wird gelöst durch eine Vorrichtung mit den Merkmalen des ersten Anspruchs. Die abhängigen Ansprüche 2 bis 10 geben vorteilhafte Weiterbildungen an.

Der Vorteil der beanspruchten Vorrichtung ist, dass die Zahl der Moleküle kritischer Gase, die es bis zur Hochvakuumpumpe schaffen, durch das Ausführen von mindestens zwei Stößen mit einer Wand deutlich reduziert wird. Der Stoß mit einer Wandfläche der Vorrichtung führt erhöht die Wahrscheinlichkeit der Kondensation kritischer Moleküle, beispielsweise metallischer Dämpfe oder Nichtmetalle wie Selen und Schwefel, in der Vorrichtung. Gefahr für die Hochvakuumpumpe wird so abgewendet, da sich die in der Vorichtung abgelagerten Moleküle nicht mehr in der Hochvakuumpumpe ablagern können. Es ergibt sich auf diese Weise ein optimaler Schutz der Hochvakuumpumpe bei geringen Einbußen an Saugvermögen durch den begrenzten Leitwert der Vorrichtung.

Die Merkmale der Ansprüche 2 und 3 bringen zusätzliche Vorteile im Hinblick auf die Wartung. Durch Ablagerung auf der Leitstruktur wird das Material auf einem zugänglichen Teil der Vorrichtung abgeschieden, was die Reinigung erleichtert. Zusätzlich erleicht wird die Reinigung mit einem Wartungsflansch nach Anspruch 6 und 7. Die Merkmale der Ansprüche 4 und 5 bringen den zusätzlichen Vorteil, dass die Abscheidungsrate auf gekühlten Flächen höher ist, wodurch im Zusammenwirken mit der Zahl der Wandstöße die Abscheidung verstärkt und so der Schutz der Hochvakuumpumpe erhöht wird. Das Merkmal nach Anspruch 8 erlaubt einen konstruktiv einfachen und kostengünstigen Aufbau, da ein T-Stück mit drei Rohrabschnitten zum Einsatz kommen kann. Außerdem befinden sich durch die winklige Anordnung von erstem und zweitem Flansch Hochvakuumpumpe und Kammer nicht auf einer Sichtlinie. Dies vereinfacht die Gestaltung der Leitstruktur, da die Symmetrie der Anordnung reduziert ist und ein notwendiger Stoß während der Passage des Winkels ausgenutzt werden kann. Es ist kostengünstig, wenn die Leitstruktur Leitbleche nach Anspruch 9 umfasst. Besonders vorteilhaft wirkt die Vorrichtung mit solchen Hochvakuumpumpen zusammen, die einen sich schnell drehenden Rotor, insbesondere nach turbomolekularer Bauart, aufweisen, da sich Ablagerungen auf diesem besonders gravierend auswirken. Schnelle Drehung bedeutet hier einige Zigtausend Umdrehungen pro Minute.

An Hand eines Ausführungsbeispiels und seiner Weiterbildungen sollen die Darstellung der Erfindung vertieft und die Vorteile herausgearbeitet werden. Es zeigen:
- Fig. 1:: Teilschnitt durch eine Anordnung mit einem Rezipienten, einer Vorrichtung und einer Hochvakuumpumpe;
- Fig. 2:: Darstellung des Wirkprinzips der Leitstruktur aus Fig.l;
- Fig. 3:: Schematische Darstellung einer winkligen Anordnung von Rezipient und Hochvakuumpumpe mit einer Vorrichtung, die eine chevronförmige Leitstruktur an einem Flansch aufweist;
- Fig. 4:: Schematische Darstellung einer winkligen Anordnung von Rezipient und Hochvakuumpumpe mit einer Vorrichtung, die eine Leitstruktur mit in zwei Ebenen angeordneten Leitbleche aufweist;
- Fig. 5:: Schematische Darstellung einer winkligen Anordnung von Rezipient und Hochvakuumpumpe mit einer Vorrichtung, die eine Leitstruktur mit Kanalabschnitten aufweist, die nur von Vorrichtungswand zugänglich sind und auf eine solche führen;
- Fig. 6:: Schematische Darstellung einer geraden Anordnung von Rezipient, Vorrichtung und Hochvakuumpumpe, wobei die Leitstruktur Leitbleche in einer doppelten Chevronanordnung umfasst;
- Fig. 7:: Schematische Darstellung einer geraden Anordnung von Rezipient, Vorrichtung und Hochvakuumpumpe, wobei die Leitstruktur rotationssymmetrische Blenden umfasst.

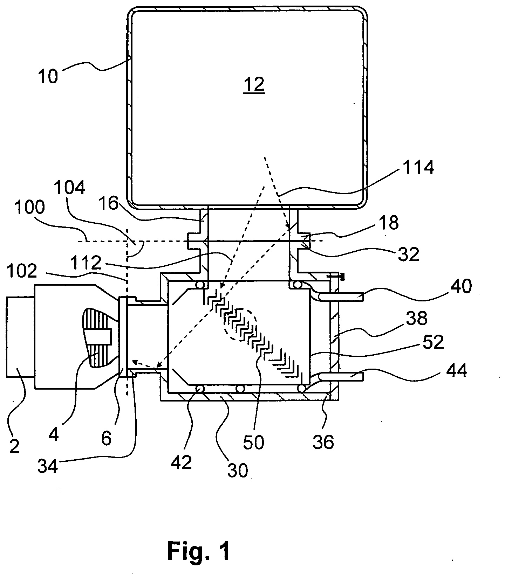

In einem Teilschnitt zeigt Fig. 1 eine Anordnung mit einer Hochvakuumpumpe 2, einer Kammer 10 und einer Vorrichtung 30. Die Kammer besitzt einen Innenraum 12, in welchem Prozesse ablaufen, beispielsweise die Herstellung von Solarzellen.

Der Innenraum kann entsprechende Einbauten enthalten oder mit den Innenräumen weiterer Kammern verbunden sein, in denen die Einbauten enthalten sind. Durch die Prozesse entstehen Dämpfe und Gase, die zusammen mit der Atmosphäre von der Hochvakuumpumpe abgesaugt werden. Um die Absaugung zur ermöglichen, ist ein Kammerflansch 18 vorgesehen, der im gezeigten Beispiel an einem Rohrstück 16 angebracht ist. In einigen Anwendungen wird jedoch auf dieses Rohrstück verzichtet, in anderen wiederum sind weitere Bauteile wie Sperrschieber und dergleichen vorgesehen.

Die Hochvakuumpumpe ist als Turbomolekularpumpe ausgestaltet und weist einen Rotor turbomolekularer Bauart 4 auf. Das abgepumpte Gas wird von ihr an eine nicht dargestellte, im Gasstrom nachfolgend angeordnete Pumpe übergeben, die bis auf Atmosphärendruck verdichtet. Zur Kopplung an zu evakuierende Baugruppen weist die Hochvakuumpumpe einen Pumpenflansch 6 auf.

Im Gasstrom zwischen Hochvakuumpumpe und Kammer befindet sich eine Vorrichtung 30. Sie weist einen ersten Flansch 32 auf, der mit dem Kammerflansch lösbar verbunden ist, und durch den Gas in die Vorrichtung gelangt. Ein zweiter Flansch 34 ist vorgesehen, der mit dem Pumpenflansch der Vakuumpumpe lösbar verbunden ist.

Im Gehäuse der Vorrichtung befindet sich eine Leitstruktur 50. Diese ist so angeordnet und gestaltet, dass jedes direkt aus dem Innenraum 12 der Kammer durch den ersten Flansch hindurchtretende Molekül auf dem Weg zwischen erstem und zweitem Flansch wenigstens zwei Stöße mit der Vorrichtung ausführt. In Fig. 1 sind Flugbahnabschnitte zweier Moleküle als Beispiel angegeben. Auf der ersten Trajektorie 112 bewegt sich ein Molekül, welches direkt aus dem Innenraum kommend den ersten Flansch durchtritt und bis dahin keinen Stoß, beispielsweise mit dem Rohrstück 16, durchgeführt hat. Auf der zweiten Trajektorie 114 führt das Molekül zunächst einen Stoß mit der Innenwand des Rohrstücks durch, bevor es durch den ersten Flansch hindurchtritt. Die Leitstruktur ist so gestaltet, dass das Molekül von der Innenwand des Rohrstücks nur entlang der gezeigten Linie durch die Leitstruktur hindurchfliegen kann. Bei jeder anderen Flugbahn stößt es mit der Vorrichtung. Die erlaubte Flugbahn ist so bemessen, dass es einen zweiten Stoß mit der Vorrichtung durchführt.

Die Leitstruktur kann so angeordnet und gestaltet sein, dass jedes durch den ersten Flansch hindurchtretende Molekül auf dem Weg zwischen erstem und zweitem Flansch wenigstens zwei Stöße mit der Vorrichtung ausführt. Dies bedeutet eine weitere Erhöhung der Kondensationswahrscheinlichkeit innerhalb der Vorrichtung. Es vereinfacht zudem die Konstruktion, da nur geometrische Größen der Vorrichtung beachtet werden müssen.

Die Leitstruktur kann an einen Kühlungskreislauf angeschlossen sein, der einen Kühlmittelzulauf 40, ein Kühlmittelrohr 42 und einen Kühlmittelablauf 44 umfasst. Teil des gekühlten Bereichs der Vorrichtung kann ein Innenkörper 52 sein, der im Wesentlichen die Innenwandungen der Vorrichtung abdeckt. Innenkörper und Leitstruktur sind durch einen von einem Deckel 38 verschlossenen Wartungsflansch 36 heraus zur Reinigung oder zum Ersatz entnehmbar. Kühlmittelzulauf und Kühlmittelablauf können auf dem Deckel angeordnet sein.

Die nachfolgenden Figuren dienen der Erläuterung des Wirkprinzips der Leitstruktur und zeigen Gestaltungswege auf.

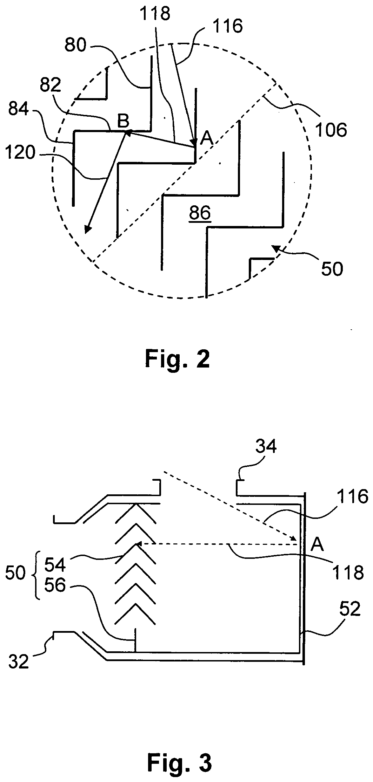

In Fig. 2 ist der durch einen gestrichelten Kreis markierte Teilbereich aus Fig. 1 detaillierter dargestellt. Die Leitstruktur umfasst Leitbleche, die in drei Schenkel 80, 82 und 84 aufgeteilt sind. Die Leitbleche sind so versetzt zueinander angeordnet, dass zwischen den Schenkeln der Leitbleche abgewinkelte Kanäle 86 entstehen. Der Versatz ist dabei so gewählt, dass die Sichtlinie 106 gerade so versperrt wird, ein Molekül daher nicht durch die Leitstruktur hindurchtreten kann, ohne mit der Leitstruktur zu stoßen. Sollte die Sichtlinie geöffnet werden, ist die in Fig. 1 gezeigte Bedingung zu beachten. Diese lautet, dass die Sichtlinie einerseits eine Wand zwischen Innenraum und Leitstruktur und andererseits eine Wand zwischen Vorrichtung und Rotor schneidet. Da Kammern und Hochvakuumpumpen nicht genormt sind, ist es zur Verwendbarkeit in beliebigen Anlagen vorteilhaft, die Bedingung derart abzuändern, dass die Sichtlinie beidseits der Leitstruktur eine Wand der Vorrichtung schneidet.

Die Mehrheit aller Moleküle muss mehrere Stöße mit der Leitstruktur durchführen. Dies ist an dem Weg eines Moleküls gezeigt. Es kommt in einer ersten Flugphase 116 aus dem Innenraum der Kammer und trifft in Punkt A auf den Schenkel 80 eines Leitbleches. Von dort startet es, da die Vorrichtung im molekularen Strömungsbereich betrieben wird, gemäß der bekannten statistischen Kosinusverteilung. Nach einer Flugphase 118 berührt es den Schenkel 82 in Punkt B und startet von dort in die dritte Fugphase 120, mit der es die Leitstruktur verlässt.

Eine etwas andere Ausgestaltung der Leitstruktur zeigt Fig. 3. Hier sind vor dem zweiten Flansch 32 Winkelbleche 54 mit zweischenkligem Querschnitt vorgesehen. Die Schenkellängen, der Winkel zwischen den Schenkeln und der Abstand der Winkelbleche zueinander sind so gewählt, dass die Leitstruktur optisch dicht ist, es also keine direkte Sichtlinienverbindung zwischen beiden Seiten der Leitstruktur gibt. Für einige Abschnitte der Leitstruktur können Blenden 56 zum Einsatz kommen. Ein Molekül tritt in einer ersten Flugphase 116 durch den ersten Flansch 34 und trifft an Punkt A auf eine innere Wand des Innenkörpers 52. Nach kurzer Verweilzeit beginnt die zweite Flugphase 118, an derem Ende er auf die Leitstruktur 50 trift. Durch deren optische Dichtheit kann das Molekül nicht ohne Stoß von Punkt A kommend durch die Leitstruktur hindurch zum zweiten Flansch 32 gelangen.

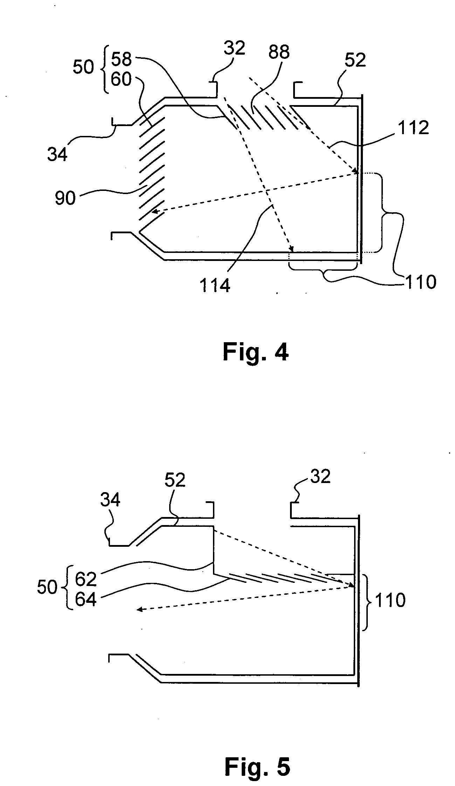

Mit der Leitstruktur nach Fig. 4 wird eine weitere Gestaltungsmöglichkeit ausgeschöpft. Anstelle einer einzigen Ebene mit Leitblechen, sind hier die Leitbleche in zwei Ebenen aufgeteilt. Ein erster Satz Leitblech 58 ist innerhalb der Vorrichtung im Gasstrom hinter dem ersten Flansch 32 vorgesehen. Die Leitbleche weisen einen einschenkligen Querschnitt auf, wodurch ein gerader Kanal 88 entsteht.

Im Gasstrom vor dem zweiten Flansch 34 ist ein zweiter Satz Leitbleche 60 vorgesehen, zwischen denen gerade Kanäle 90 ausgebildet sind.

Länge, Neigungswinkel und Abstand der Leitbleche eines jeden Leitblechsatzes und Winkel zwischen den geraden Kanälen 88 und 90 sind wie folgt bemessen. Als erste Bedingung ist erfüllt, dass es für ein Molekül keine Möglichkeit gibt, ohne Stoß mit einem der Leitbleche durch beide Kanäle 88 und 90 hindurchzufliegen. Ein Molekül, welches durch den ersten Flansch 32 hindurchtritt und nicht mit dem ersten Leitblechsatz stößt, kann gemäß der Trajektorien 112 und 114 nur in einer Auftreffzone 110 mit dem Innenkörper 52 stoßen. Die vorgenannten Parameter der Leitstruktur sind nun so gewählt, dass als zweite Bedingung erfüllt ist, dass kein aus der Auftreffzone 110 startendes Molekül ohne Stoß mit dem zweiten Leitblechsatz durch den zweiten Flansch 34 austreten kann.

In Fig. 5 ist als Gestaltungsmöglichkeit das Zusammenspiel einer Prallwand und einer Ebene mit Leitblechen vorgestellt. Die Leitbleche 64 sind so angeordnet, dass nur solche Moleküle eine im Gasstrom hinter der Leitstruktur vorgesehenen Auftreffzone 110 erreichen können, die von einer im Gasstrom zwischen erstem Flansch 32 und Leitstruktur angeordneten Prallwand 62 starten. Prallwand und Leitstruktur sind zudem so gestaltet und angeordnet, dass kein Molekül direkt oder mit einem Stoß durch ersten und zweiten Flansch 34 fliegen kann. Jedes ohne Stoß durch die Leitstruktur hindurchtretendes Molekül führt mindestens zwei Stöße mit der Vorrichtung aus, nämlich einen mit der Prallwand und einen mit der Auftreffzone auf dem Innenkörper 52.

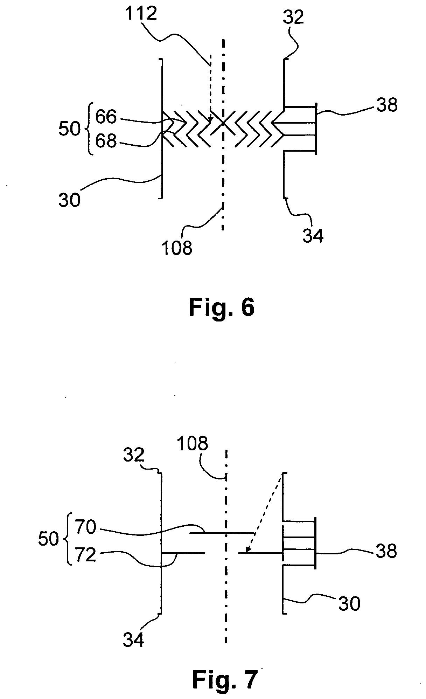

Bisher wurden Vorrichtungen betrachtet, bei denen die Ebenen von erstem und zweitem Flansch einen Winkel miteinander bilden. Auch auf Vorrichtungen mit geradem Durchtritt, bei dem die Flanschebenen etwa parallel zueinander sind, ist der Erfindungsgedanke anwendbar. Dies ist in den Fig. 6 und 7 dargestellt.

Die Vorrichtung 30 gemäß Fig. 6 weist ein im Wesentlichen rohrförmiges Gehäuse auf. In diesem Gehäuse ist eine Leistruktur 50 vorgesehen, die mehrere ringförmige und konzentrisch zueinander angeordnete Bleche umfasst. Der Querschnitt der Bleche ist mehrschenklig, wobei die miteinander verbundenen Schenkel in einem ersten und einem zweiten Winkel 66 und 68 zueinander stehen. Die Schenkel und Winkel sind dabei so gestaltet, dass ein Molekül, das sich entlang einer ersten Trajektorie 112 parallel zur Längsachse 108 des Rohres bewegt, nicht auf direktem Weg durch die Leitstruktur hindurchbewegen kann sondern mit dieser zwei Stöße ausführen muss. Dies vollzieht sich nach dem in Fig. 2 beschriebenen Prinzip. Die Leitstruktur kann einem Deckel 38 befestigt sein, mit dem zusammen sie von der Vorrichtung abmontiert werden kann, beispielsweise zur Wartung.

In der Vorrichtung gemäß Fig. 7 umfasst die Leitstruktur 50 Blenden. Die Blenden 70 und 72 sind vorteilhaft rotationssymmetrisch aufgebaut. Blende 70 kann eine Kreisscheibe sind oder ein Kegel, dessen Spitze in Richtung erstem Flansch 32 orientiert ist und dessen Basis in Richtung Blende 72 zeigt. Diese kann als Lochblende gestaltet sein. Durchmesser der Kreisscheibe, der Öffnung in der Lochblende und Abstand der Blenden zueinander sind wie folgt bemessen: ein Molekül kann nicht auf direktem Wege oder mittels einem Stoß durch die Leitstruktur hindurchtreten. Zudem dürfen nur solche Moleküle durch die Leitstruktur gelangen, die zuvor einen Stoß mit der Vorrichtung durchgeführt haben und nach dem Durchtritt wieder auf einem Teil der Vorrichtung landen.

## Patentansprüche

1. Vorrichtung (30) mit einer Leitstruktur (50) und einem Gehäuse, welches einen ersten Flansch (32) zum Verbinden der Vorrichtung mit einem einen Innenraum (12) besitzenden Rezipienten (10) und einen zweiten Flansch (6) zum Verbinden der Vorrichtung mit einer Hochvakuumpumpe (2) aufweist, **dadurch gekennzeichnet, dass** die Leitstruktur (50) so optisch dicht angeordnet und gestaltet ist, dass jedes direkt aus dem Innenraum durch den ersten Flansch hindurchtretende Molekül auf dem Weg zwischen erstem und zweitem Flansch wenigstens zwei Stöße mit der Vorrichtung (30) ausführt.

2. Vorrichtung nach Anspruch 1, **dadurch gekennzeichnet, dass** die Leitstruktur (50) so optisch dicht angeordnet und gestaltet ist, dass ein Stoß mit der Leitstruktur stattfindet.

3. Vorrichtung nach Anspruch 1, **dadurch gekennzeichnet, dass** die Leitstruktur (50) so optisch dicht angeordnet und gestaltet ist, dass wenigstens zwei Stöße mit der Leitstruktur stattfinden.

4. Vorrichtung nach einem der vorhergehenden Ansprüche, **dadurch gekennzeichnet, dass** die Leitstruktur (50) mit einer Kühleinrichtung (40, 42, 44) verbunden ist.

5. Vorrichtung nach einem der vorhergehenden Ansprüche, **dadurch gekennzeichnet, dass** sie einen Innenkörper (52) umfasst, welcher mit einer Kühleinrichtung (40, 42, 44) verbunden ist.

6. Vorrichtung nach einem der vorhergehenden Ansprüche, **dadurch gekennzeichnet, dass** sie einen Wartungsflansch (36) umfasst, durch welchen die Leitstruktur (50) entnehmbar ist.

7. Vorrichtung nach Anspruch 6, **dadurch gekennzeichnet, dass** Leitstruktur (50) und Innenkörper (52) durch den Wartungsflansch (36) entnehmbar sind.

8. Vorrichtung nach einem der vorhergehenden Ansprüche, **dadurch gekennzeichnet, dass** eine Flanschebene (100) des ersten Flansches und eine Flanschebene (102) des zweiten Flansches in einem von Null verschiedenen Winkel (104), vorzugsweise einem rechten Winkel, zueinander angeordnet sind.

9. Vorrichtung nach einem der vorhergehenden Ansprüche, **dadurch gekennzeichnet, dass** die Leitstruktur (50) wenigstens ein Leitblech (54, 58, 60, 62, 64, 66, 68, 70, 72) umfasst.

10. Anordnung mit einer Vorrichtung nach einem der vorhergehenden Ansprüche, **dadurch gekennzeichnet, dass** die Hochvakuumpumpe (2) einen schnelldrehenden Rotor (4), insbesondere nach turbomolekularer Bauart, aufweist.

## Claims

1. An apparatus (30) comprising a guidance structure (50); and a housing which has a first flange (32) for connecting the apparatus to a recipient (10) having an inner space (12) and which has a second flange (6) for connecting the apparatus to a high-vacuum pump (2), **characterized in that** the guidance structure (50) is arranged and designed as optically dense in such a manner that each molecule passing directly from the inner space through the first flange carries out at least two collisions with the apparatus (30) on the way between the first and second flanges.

2. An apparatus in accordance with claim 1, **characterized in that** the guidance structure (50) is arranged and designed as optically dense in such a manner that a collision with the guidance structure takes place.

3. An apparatus in accordance with claim 1, **characterized in that** the guidance structure (50) is arranged and designed as optically dense in such a manner that at least two collisions with the guidance structure take place.

4. An apparatus in accordance with any one of the preceding claims, **characterized in that** the guidance structure (50) is connected to a cooling device (40, 42, 44).

5. An apparatus in accordance with any one of the preceding claims, **characterized in that** it comprises an inner body (52) which is connected to a cooling device (40, 42, 44).

6. An apparatus in accordance with any one of the preceding claims, **characterized in that** it comprises a maintenance flange (36) by which the guidance structure (50) can be removed.

7. An apparatus in accordance with claim 6, **characterized in that** the guidance structure (50) and the inner body (52) can be removed by the maintenance flange (36).

8. An apparatus in accordance with any one of the preceding claims, **characterized in that** a flange plane (100) of the first flange and a flange plane (102) of the second flange are arranged at an angle (104) different from zero, preferably at a right angle, to each other.

9. An apparatus in accordance with any one of the preceding claims, **characterized in that** the guidance structure (50) comprises at least one baffle (54, 58, 60, 62, 64, 66, 68, 70, 72).

10. An arrangement having an apparatus in accordance with any one of the preceding claims, **characterized in that** the high-vacuum pump (2) has a fast-rotating rotor (4), in particular of a turbomolecular design.

## Revendications

1. Dispositif (30) comportant une structure de guidage (50) et un boîtier comprenant une première bride (32) pour relier le dispositif à un récipient (10) ayant un espace intérieur (12), et une seconde bride (6) pour relier le dispositif à une pompe à vide poussé (2),
**caractérisé en ce que**
la structure de guidage (50) est disposée et configurée de façon optiquement étanche de telle sorte que chaque molécule passant directement de l'espace intérieur à travers la première bride effectue au moins deux impacts avec le dispositif (30) sur le chemin entre les première et seconde brides.

2. Dispositif selon la revendication 1,
**caractérisé en ce que**
la structure de guidage (50) est disposée et conçue de façon optiquement étanche de telle sorte qu'un impact s'effectue avec la structure de guidage.

3. Dispositif selon la revendication 1,
**caractérisé en ce que**
la structure de guidage (50) est agencée et conçue de façon optiquement étanche de telle sorte qu'au moins deux impacts s'effectuent avec la structure de guidage.

4. Dispositif selon l'une des revendications précédentes,
**caractérisé en ce que**
la structure de guidage (50) est reliée à un dispositif de refroidissement (40, 42, 44).

5. Dispositif selon l'une des revendications précédentes,
**caractérisé en ce que**
il comprend un corps intérieur (52) qui est relié à un dispositif de refroidissement (40, 42, 44).

6. Dispositif selon l'une des revendications précédentes,
**caractérisé en ce que**
il comprend une bride de maintenance (36) à travers laquelle la structure de guidage (50) peut être enlevée.

7. Dispositif selon la revendication 6,
**caractérisé en ce que**
la structure de guidage (50) et le corps intérieur (52) peuvent être enlevés à travers la bride de maintenance (36).

8. Dispositif selon l'une des revendications précédentes,
**caractérisé en ce que**
un plan de bride (100) de la première bride et un plan de bride (102) de la seconde bride sont disposés l'un par rapport à l'autre selon un angle (104) non nul, de préférence selon un angle droit.

9. Dispositif selon l'une des revendications précédentes,
**caractérisé en ce que**
la structure de guidage (50) comprend au moins une tôle de guidage (54, 58, 60, 62, 64, 66, 68, 70, 72).

10. Agencement comportant un dispositif selon l'une des revendications précédentes,
**caractérisé en ce que**
la pompe à vide poussé (2) comprend un rotor (4) tournant rapidement, en particulier de type turbomoléculaire.
